Europäisches Patentamt

European Patent Office

Office européen des brevets

(11) Publication number: **0 159 885**
**B1**

(12) **EUROPEAN PATENT SPECIFICATION**

(45) Date of publication of patent specification: **06.12.89**

(51) Int. Cl.⁴: **B 01 D 1/06, F 28 F 21/06**

(21) Application number: **85302595.5**

(22) Date of filing: **12.04.85**

(54) **Evaporators.**

(30) Priority: **13.04.84 GB 8409618**

(43) Date of publication of application:
**30.10.85 Bulletin 85/44**

(45) Publication of the grant of the patent:
**06.12.89 Bulletin 89/49**

(84) Designated Contracting States:
**DE FR GB IT NL**

(56) References cited:
**DE-A-2 819 054**
**GB-A-1 139 810**
**GB-A-1 220 595**
**GB-A-1 468 935**

(73) Proprietor: **COURTAULDS PLC**
**18, Hanover Square**
**London W1A 2BB (GB)**

(72) Inventor: **Pratt, Desmond Charles Furby**
**82, The Fairways**
**Leamington Spa Warwickshire (GB)**

(74) Representative: **Hale, Stephen Geoffrey et al**
**J. Y. & G. W. Johnson Furnival House**
**14/18 High Holborn**
**London WC1V 6DE (GB)**

Courier Press, Leamington Spa, England.

**Description**

This invention relates to evaporators of the type in which vapour is evaporated from liquid flowing down substantially vertical heat-exchange tubes arranged in a bundle.

Evaporators of this type in which liquid flows down the internal surfaces of the tubes are shown in GB—A—893,633 and 917,715. Conventionally, they are constructed from rigid metal or carbon tubes having an internal diameter of 2.5 mm or more.

It has also been proposed to construct evaporators using tubes of flexible plastics film to provide a cheap, non-corroding heat transfer surface. Thin film was used in order to minimise the thermal resistance of the tube walls. GB—A—1,139,810 and 1,220,595 describe such evaporators using, for example, tubes of 31.7 mm diameter made from polyethylene film of 0.217 mm thickness. In both of these specifications, and also in GB—A—1,468,935, the evaporators described are used in vapour compression processes operated with the liquid to be evaporated flowing down the outside of the tubes, and with the compressed distillate being condensed within the tubes to provide the necessary heat transfer for evaporation. This arrangement was used so that the resulting pressure difference across the tube walls inflated the tubes. The reverse arrangement would have collapsed them.

According to this invention, an evaporator comprises a bundle of substantially vertical heat-exchange tubes of plastics material, means for flowing a liquid to be evaporated down the walls of said tubes, and means for supplying to the opposite surface of the tube walls a fluid which is to transfer heat through the tube walls to said liquid to cause evaporation of vapour therefrom, and is characterised in that the means for flowing the liquid are arranged to supply the liquid to the internal surfaces of the tubes, the means for supplying the fluid is arranged to supply the fluid to the external surfaces of the tubes and the tubes have an internal cross-sectional area of not more than 125 mm².

The tubes preferably are of substantially circular cross-section with an internal diameter not more than 12.6 mm, and preferably in the range 4.0 mm to 8.0 mm. The wall thickness of the tubes is preferably in the range 0.05 mm to 0.5 mm. The plastics material of the tubes needs to be resistant to the chemical and thermal conditions of the evaporation process, and it is preferably a low cost thermoplastic polymer. Polyolefins are the preferred materials, including ethylene and propylene homopolymers and copolymers. The thermoplastic polymer preferably is crosslinked to give improved mechanical and chemical stability and greater tube life. This may be effected by thermal, chemical or radiation treatments of the tubes, preferably as part of the tube extrusion process.

The evaporator of the invention may be of the vapour compression type in which case it includes means for compressing vapour evaporated from the liquid flowing down the internal surfaces of the tube walls and for supplying such compressed vapour to the external surfaces of the tube walls as the aforesaid fluid which is to transfer heat through the tube walls to the evaporating liquid. The elevation in boiling point caused by compression allows the vapour to condense on the external surfaces of the tube walls and so provide the required heat transfer through the tube walls.

With this arrangement, the greater pressure externally of the tubes gives a potential for tube collapse, but it has been found that the use of the small cross-section tubes allows the tubes to have sufficient rigidity to resist collapse at the comparatively low pressure difference across the tube walls which it is possible to use. The reason why low pressure differences can be used is based upon the low capital cost of the plastics tubes compared with conventional metal tubes. This low cost means that, for a given evaporation duty, the heat transfer surface area may be substantially increased, by using a much greater overall length of the plastics tubes than would be economic in capital terms for metal tubes, so that the temperature difference across the tube walls can be very low, for example of the order of 1°C. Only a low compression of the evaporated vapour is then required to give the desired temperature driving force. Within the specified ranges, the parameters of tube cross-sectional area and tube wall thickness are chosen so that the tubes resist collapse at the designed pressure difference.

At low compression ratios it becomes possible to use a single-stage fan for compressing the vapour rather than the high speed compressor required at higher ratios, and this gives a significant benefit by substantially reducing capital costs.

The operating temperature is also relevant to the resistance of the tubes to collapse or to stretch (known as tube creep), particularly when the tubes comprise a thermoplastic polymer which can soften at elevated temperatures. Preferably such adverse effects of softening of the tubes are minimised as far as possible by operating the evaporator at a temperature which is sufficiently far below the softening point of such a thermoplastic polymer. For example, operating temperatures of below about 70°C. are suitable with high density polyethylene tubes. Crosslinking of the polymer is also of benefit in minimising temperature effects.

It was expected that the use of small cross-section tubes would given rise to problems of excessive pressure drops down the tubes and to interference between the liquid flowing down the internal surface of the tube walls and the evaporated vapour flow within the tubes, possibly giving rise to bridging of liquid across the tubes and unstable, inefficient evaporation. In fact, it has proved possible to operate a stable system without excessive pressure drops because the heat flux per unit area can be kept low, and this gives rise to low vapour flow rates within the tubes. Naturally, the pressure drop considerations require the usual correlation between tube length and tube diameter but, for the tube diameters specified, tubes of sufficient length may be used to allow the construction of practical and economic evaporators. A suitable range of tube length is 1 to 10 metres.

The use of small cross-section tubes gives another important advantage in terms of evaporator sizing by allowing closer packing of tubes. This gives a substantial increase in heat transfer surface per unit volume, preferably in excess of 150 square metres per cubic metre, which is a significant factor in reducing capital costs. For example, tubes of 6.0 mm internal diameter and 6.3 mm external diameter can be packed in triangular pitch to a density of 15,000 tubes per square metre of cross-section, giving 290 square metres of heat transfer surface per cubic metre volume. For purposes of comparison, a typical metal tube evaporator comprises tubes of 30 mm internal diameter and 33 mm external diameter packed in triangular pitch with 6 mm gaps (39 mm centres). With this packing, the tube density is 759 tubes per square metre of cross-section, giving 75 square metres of heat transfer surface per cubic metre volume.

The evaporator of the invention is useful for a variety of evaporation duties, including the recovery of usable water from brine, brackish or polluted waters and aqueous process streams, the concentration of dilute liquors, and the concentration of feed, re-cycle or waste process streams. It may be in the usual tube and shell form, with the plastics tubes being assembled in tube plates at opposite ends. Preferably the tube ends are moulded into tube plates comprising a thermoplastic or a thermosetting resin.

The heat-transfer efficiency is improved if the liquid flowing down the internal surfaces of the tube walls does so as a liquid film, as near continuous as possible. With aqueous liquids, the obtaining of this condition is assisted by making the internal surfaces of the tube walls wettable. Plastics heat-exchange tubes which have been treated to render their surfaces wettable are described in European Patent Application No. 0,056,705. When the fluid supplied to the external surfaces of the tubes walls, for example steam or the compressed evaporated vapour, is required to condense on the tubes to provide the desired heat transfer, then those external surfaces preferably are not made wettable, so that drop-wise condensation is promoted.

The liquid to be evaporated is fed to the upper ends of the tubes so that it may flow down the internal surfaces of the tube walls. Distribution across the tube bundle may be improved by spraying the liquid evenly over the top surface of the upper tube plate. The latter may be provided with recesses of equal area, each leading to a tube, with minimal 'land' between recesses, so that each tube is fed from an equal, spray catchment area. An arrangement of this type is described in British Patent No. 1,220,595.

The vapour evaporated from the falling liquid may be exhausted from the tubes at their lower ends or at both ends. If exhaustion is to be carried out from both ends of the tubes, then care has to be taken that the vapour flow from the upper ends does not adversely interfere with the ingress and downward flow of the liquid.

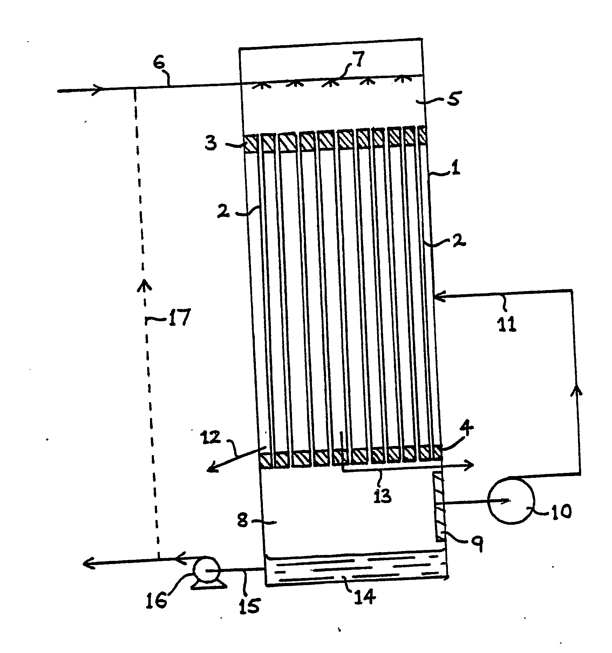

The invention is illustrated by the accompanying drawing in which the single figure is a schematic diagram of an evaporator according to the invention used in a vapour compression process.

Referring to the drawing, an evaporator comprises a cylindrical shell (1) enclosing a bundle of small diameter plastics heat-exchange tubes (2). The tubes (2) are mounted vertically between upper and lower tube plates (3), (4) into which their opposite ends are integrally moulded.

In order to avoid tube buckling caused by thermal extension or creep of the tubes, it is preferable to provide an arrangement which can compensate for this. This is not shown in the drawing, but it may comprise, for example, spring-loaded adjustment of individual tubes or of the bottom tube plate as a whole.

A dilute liquor, for example seawater, is fed into an upper header (5) through a pipe (6) and is sprayed through nozzles (7) to form an even spray above the upper tube plate (3). The spray is distributed over the upper tube plate from where it flows down the internal surfaces of the tubes (2) in the form of falling liquid films. Water vapour evaporated from the falling liquid films is drawn down the tubes, into a lower header (8) and then out of the shell through a demister (9) by a single-stage compression fan (10). The water vapour is compressed by the fan and then passed back into the shell through pipe (11) and around the outside of the tubes. The compression increases the temperature at which the water vapour condenses, to give the required temperature difference for heat transfer through the tube walls between the condensing water vapour and the falling liquid films.

The condensate water collects on the lower tube plate (4) and is removed through an outlet (12). Incondensible gases are vented through an outlet (13). Concentrated liquor (14) collects in the bottom of a lower header (8) from where it is withdrawn through an outlet pipe (15) by a pump (16). A re-cycle stream (17) of the concentrated liquor may be pumped back into the feed inlet pipe (6) if desired.

The invention is further illustrated by the following Examples which give design data relevant to model evaporator and process schemes to demonstrate the practicality and benefits of using small diameter plastics tubes in evaporators:-

## Example 1

A vertical tube and shell evaporator was used in a vapour compression process. The tube specification and process conditions were as follows:-

| | |
|---|---|
| Evaporator Tubes Plastics material | = High density polyethylene with wettable surface (EPA 0,056,705) |
| Internal diameter | = 6.0 mm |
| Wall thickness | = 0.16 mm |
| Tube length | = 5.0 metres |
| Process Conditions Liquid to be evaporated | = Water |
| Inlet temperature of liquid | = 60°C. |
| Heating fluid | = Compressed vapour evaporated from the liquid water |
| Vapour exhaustion | = Bottom end of tubes only |
| Tube-side outlet pressure | = 0.207 bar absolute |
| Shell-side pressure | = 0.218 bar absolute |
| $\triangle T$ for heat transfer | = 1.1°C. |
| Rate of evaporation | = 0.095 kg/hr/tube |
| Velocity of water vapour at tube outlet | = 7.0 metres/sec. |
| Pressure drop down tubes | = 0.002 bar absolute |

The latter is an acceptable pressure drop for many applications. There was no tendency for any tube collapse.

## Example 2

The same vertical tube and shell evaporator as was used in Example 1 was used in a vapour compression process for the desalination of seawater using the following process conditions:-

| | |
|---|---|
| Liquid to be evaporated | = Seawater |
| Operating boiling point elevation | = 0.55°C. |
| Inlet temperature of liquid | = 60°C. |
| Heating fluid | = Compressed water vapour evaporated from the seawater |
| Vapour exhaustion | = Bottom end of tubes only |
| Tube side outlet pressure | = 0.20 bar absolute |
| Shell side pressure | = 0.22 bar absolute |
| $\triangle T$ for heat transfer | = 1.53°C. |
| Rate of evaporation | = 0.136 kg/hr/tube |

4

Velocity of water vapour
at tube outlet          = 10.5 metres/sec.

Pressure drop down tubes = 0.0052 bar absolute

The latter is an acceptable pressure drop in this application. There was no tendency for any tube collapse.

## Claims

1. An evaporator comprising a bundle of substantially vertical heat-exchange tubes (2) of plastics material, means (3, 7) for flowing a liquid to be evaporated down the walls of said tubes (2), and means (11) for supplying to the opposite surface of the tube walls a fluid which is to transfer heat through the tube walls to said liquid to cause evaporation of vapour therefrom, characterised in that the means (3, 7) for flowing the liquid are arranged to supply the liquid to the internal surfaces of the tubes (2), the means (11) for supplying the fluid is arranged to supply the fluid to the external surfaces of the tubes (2) and the tubes (2) have an internal cross-sectional area of no greater than 125 mm$^2$.

2. An evaporator as claimed in claim 1, characterised in that the heat-exchange tubes (2) are of substantially circular cross-section and of internal diameter no greater than 12.6 mm.

3. An evaporator as claimed in claim 2, characterised in that the internal diameter of the heat-exchange tubes (2) is in the range 4 to 8 mm.

4. An evaporator as claimed in any of claims 1 to 3, characterised in that the wall thickness of the tubes (2) is in the range 0.05 to 0.5 mm.

5. An evaporator as claimed in any of claims 1 to 4, characterised in that the bundle of heat-exchange tubes (2) has a heat transfer surface per unit volume of at least 150 m$^2$/m$^3$.

6. An evaporator as claimed in any of claims 1 to 5, characterised in that the walls of the tubes (2) comprise a crosslinked thermoplastic polymer.

7. An evaporator as claimed in any of claims 1 to 6, characterised in that means (10) is provided for compressing vapour evaporated from the liquid flowing down the internal surface of the walls of the tubes (2) and means (11) is provided for supplying such compressed vapour to the external surfaces of the walls of the tubes (2) as said fluid which is to transfer heat through the tube walls to the evaporating liquid.

8. An evaporator as claimed in claim 7, characterised in that the means (10) for compressing the vapour is a single-stage fan.

9. An evaporator as claimed in claim 7 or 8, characterised in that the vapour compression means (10) is arranged to receive vapour drawn down the inside of the tubes (2) and exhausted at their lower ends.

10. An evaporator as claimed in claim 7 or 8, characterised in that vapour evaporated from the flowing liquid in the tubes (2) is exhausted from both ends of the tubes and means are provided for ensuring that the vapour flow from the upper ends of the tubes does not adversely interfere with the ingress and downward flow of the liquid in the tubes.

11. An evaporator as claimed in any of claims 1 to 10, characterised in that the internal surfaces of the tubes have been treated to make them wettable and the external surfaces are relatively non-wettable so that dropwise condensation is promoted.

12. An evaporator comprising a bundle of substantially vertical heat-exchange tubes (2) of circular cross-section made of thin ethylene polymer film, means (3, 7) for flowing a liquid to be evaporated down the walls of said tubes (2), and means (11) for supplying to the opposite surface of the tube walls a vapour which is to transfer heat through the tube walls to said liquid to cause evaporation of vapour therefrom, characterised in that the means (3, 7) for flowing the liquid are arranged to supply the liquid to the internal surfaces of the walls of the tubes (2), the means for supplying the vapour is arranged to supply the vapour to the external surfaces of the tubes (2), the tubes are of internal diameter less than 12.6 mm and length 1 to 10 m, the wall thickness of the polyethylene being 0.05 to 0.5 mm, and the tubes (2) are arranged to provide a heat transfer surface area per unit volume of at least 150 m$^2$/m$^3$.

13. A process for evaporating water from an aqueous liquid characterised in that it is carried out in an evaporator as claimed in claim 12 using high density polyethylene tubes at a water inlet temperature of about 60°C.

## Patentansprüche

1. Verdampfer bestehend aus einem Bündel im wesentlichen senkrechter Wärmeaustauschrohre (2) aus Kunststoff, Einrichtungen (3, 7) zur Erzeugung einer Strömung einer zu verdampfenden Flüssigkeit an den Wänden besagter Rohre (2) herunter und einer Einrichtung (11) zur Versorgung der gegenüberliegenden Fläche der Rohrwände mit einem Fluid, das Wärme durch die Rohrwände zu besagter Flüssigkeit übertragen soll, um Verdampfung von Dampf daraus zu bewirken, dadurch gekennzeichnet, daß die Einrichtungen (3, 7) zur Erzeugung der Flüssigkeitsströmung so angeordnet sind, daß sie die Flüssigkeit auf die Innenflächen der Rohre (2) liefern, die Einrichtung (11) zur Versorgung mit Fluid so angeordnet ist, daß sie das Fluid auf die Außenflächen der Rohre (2) liefert, und die Rohre (2) eine lichte Querschnittsfläche von höchstens 125 mm² aufweisen.

2. Verdampfer nach Anspruch 1, dadurch gekennzeichnet, daß die Wärmeaustauschrohre (2) einen im wesentlichen kreisförmigen Querschnitt und einen lichten Durchmesser von höchstens 12,6 mm aufweisen.

3. Verdampfer nach Anspruch 2, dadurch gekennzeichnet, daß der lichte Durchmesser der Wärmeaustauschrohre (2) im Bereich von 4 bis 8 mm liegt.

4. Verdampfer nach einem der Ansprüche 1 bis 3, dadurch gekennzeichnet, daß die Wanddicke der Rohre (2) im Bereich von 0,05 bis 0,5 mm liegt.

5. Verdampfer nach einem der Ansprüche 1 bis 4, dadurch gekennzeichnet, daß das Bündel Wärmeaustauschrohre (2) eine Wärmübergangsfläche pro Volumeneinheit von mindestens 150 m²/m³ besitzt.

6. Verdampfer nach einem der Ansprüche 1 bis 5, dadurch gekennzeichnet, daß die Wände der Rohre (2) aus einem vernetzten thermoplastischen polymeren bestehen.

7. Verdampfer nach einem der Ansprüche 1 bis 6, dadurch gekennzeichnet, daß eine Vorrichtung (10) zur Kompression des aus der an der Innenfläche der Wände der Rohre (2) herunterströmenden Flüssigkeit verdampften Dampfes und eine Einrichtung (11) zur Lieferung solchen komprimierten Dampfes auf die Außenflächen der Wände der Rohre (2) als besagtes Fluid, welches Wärme durch die Rohrwände zu der verdampfenden Flüssigkeit übertragen soll, vorgesehen sind.

8. Verdampfer nach Anspruch 7, dadurch gekennzeichnet, daß die Vorrichtung (10) zur Kompression des Dampfes ein einstufiges Gebläse ist.

9. Verdampfer nach Anspruch 7 oder 8, dadurch gekennzeichnet, daß die Dampfkompressionsvorrichtung (10) so angeordnet ist, daß sie an der Innenseite der Rohre (2) heruntergezogenen und an deren Unterenden abgesaugten Dampf empfängt.

10. Verdampfer nach Anspruch 7 oder 8, dadurch gekennzeichnet, daß der aus der strömenden Flüssigkeit in den Rohren (2) verdampfte Dampf von beiden Enden der Rohre abgesaugt wird und Mittel zur Sicherstellung vorgesehen sind, daß die Dampfströmung von den Oberenden der Rohre nicht den Eintritt und die Strömung der Flüssigkeit nach unten in den Rohren beeinträchtigt.

11. Verdampfer nach einem der Ansprüche 1 bis 10, dadurch gekennzeichnet, daß die Innenflächen der Rohre behandelt sind, um sie benetzbar zu machen, und die Außenflächen zur Förderung von Tropfenkondensation verhältnismäßig unbenetzbar sind.

12. Verdampfer, bestehend aus einem Bündel im wesentlichen senkrechter Wärmeaustauschrohre (2) kreisförmigen Querschnitts aus dünnem Äthylenpolymerfilm, Einrichtungen (3, 7) zur Erzeugung einer Strömung einer zu verdampfenden Flüssigkeit an den Wänden besagter Rohre (2) herunter und einer Einrichtung (11) zur Versorgung der gegenüberliegenden Fläche der Rohrwände mit einem Dampf, der Wärme durch die Rohrwände zu besagter Flüssigkeit übertragen soll, um Verdampfung von Dampf daraus zu bewirken, dadurch gekennzeichnet, daß die Einrichtungen (3, 7) zur Erzeugung der Flüssigkeitsströmung so angeordnet sind, daß sie die Flüssigkeit auf die Innenflächen der Wände der Rohre (2) liefern, die Einrichtung zur Versorgung mit Dampf so angeordnet ist, daß sie den Dampf auf die Außenflächen der Rohre (2) liefert, die Rohre einen lichten Durchmesser von weniger als 12,6 mm und eine Länge von 1 bis 10 m aufweisen, wobei die Wanddicke des Polyäthylens 0,05 bis 0,5 mm beträgt und die Rohre (2) so angeordnet sind, daß sie eine Wärmeübergangsfläche pro Volumeneinheit von mindestens 150 m²/m³ ergeben.

13. Verfahren zum Verdampfen von Wasser aus einer wässrigen Flüssigkeit, dadurch gekennzeichnet, daß es in einem Verdampfer nach Anspruch 12 unter Verwendung von Rohren aus Polyäthylen hoher Dichte bei einer Wassereinlauftemperatur von etwa 60°C durchgeführt wird.

**Revendications**

1. Un évaporateur comprenant un faisceau de tubes échangeurs de chaleur à peu près verticaux (2) en matière plastique, des moyens (3, 7) pour l'écoulement d'un liquide à évaporer vers le bas sur les parois desdits tubes (2) et un moyen (11) pour fournir à la surface opposée des parois des tubes un fluide destiné à transférer la chaleur à travers les parois des tubes vers ledit liquide pour assurer l'évaporation de la vapeur à partir de celui-ci, caractérisé en ce que les moyens (3, 7) pour l'écoulement du liquide sont ménagés de façon à fournir le liquide aux surfaces internes des tubes (2), le moyen (11) pour fournir le fluide est ménagé de façon à fournir le fluide aux surfaces externes des tubes (2) et les tubes (2) ont une section transversale interne inférieure ou égale à 125 mm².

2. Un évaporateur selon la revendication 1, caractérisé en ce que les tubes échangeurs de chaleur (2) sont de section transversale à peu près circulaire et d'un diamètre interne inférieur ou égal à 12,6 mm.

3. Un évaporateur selon la revendication 2, caractérisé en ce que le diamètre interne des tubes échangeurs de chaleur (2) est dans la gamme de 4 à 8 mm.

4. Un évaporateur selon l'une quelconque des revendications 1 à 3, caractérisé en ce que l'épaisseur des parois des tubes (2) est dans la gamme de 0,05 à 0,5 mm.

5. Un évaporateur selon l'une quelconque des revendications 1 à 4, caractérisé en ce que le faisceau de tubes échangeurs de chaleur (2) a une surface de transfert de chaleur par unité de volume d'au moins 150 m²/m³.

6. Un évaporateur selon l'une quelconque des revendications 1 à 5, caractérisé en ce que les parois des tubes (2) comprennent un polymère thermoplastique réticulé.

7. Un évaporateur selon l'une quelconque des revendications 1 à 6, caractérisé en ce qu'un moyen (10) est prévu pour comprimer de la vapeur évaporée à partir du liquide s'écoulant vers le bas sur la surface interne des parois des tubes (2) et un moyen (11) est prévu pour fournir des tubes (2) à titre dudit fluide destiné à transférer la chaleur à travers les parois des tubes vers le liquide en cours d'évaporation.

8. Un évaporateur selon la revendication 7, caractérisé en ce que le moyen (10) pour comprimer la vapeur est un ventilateur à un seul étage.

9. Un évaporateur selon la revendication 7 ou 8, caractérisé en ce que le moyen pour comprimer la vapeur (10) est ménagé de façon à recevoir de la vapeur attirée vers le bas sur la paroi intérieure des tubes (2) et évacuée à leurs extrémités inférieures.

10. Un évaporateur selon la revendication 7 ou 8, caractérisé en ce que la vapeur évaporée à partir du liquide s'écoulant dans les tubes (2) est évacuée à partir des deux extrémités des tubes et des moyens sont prévus pour faire en sorte que le courant de vapeur à partir des extrémités supérieures des tubes ne nuise pas à l'entrée et à l'écoulement vers le bas du liquide dans les tubes.

11. Un évaporateur selon l'une quelconque des revendications 1 à 10, caractérisé en ce que les surfaces internes des tubes ont été traitées pour les rendre aptes au mouillage et les surfaces externes sont relativement non aptes au mouillage de telle sorte que la condensation sous forme de gouttes soit favorisée.

12. Un évaporateur comprenant un faisceau de tubes échangeurs de chaleur à peu près verticaux (2), de section transversale circulaire, réalisés dans un film mince de polymère d'éthylène, des moyens (3, 7) pour l'écoulement d'un liquide à évaporer vers le bas sur les parois desdits tubes (2), et un moyen (11) pour fournir à la surface opposée des parois des tubes une vapeur destinée à transférer la chaleur à travers les parois des tubes vers ledit liquide pour assurer l'évaporation de la vapeur à partir de celui-ci, caractérisé en ce que les moyens (3, 7) pour l'écoulement du liquide sont ménagés de façon à fournir le liquide aux surfaces internes des parois des tubes (2), le moyen pour fournir la vapeur est ménagé de façon à fournir la vapeur aux surfaces externes des tubes (2), les tubes ont un diamètre interne inférieur à 12,6 mm et une longueur de 1 à 10 m, l'épaisseur de paroi du polyéthylène étant de 0,05 à 0,5 mm, et les tubes (2) sont ménagés de façon à fournir une surface de transfert de chaleur par unité de volume d'au moins 150 m²/m³.

13. Un procédé pour l'évaporation de l'eau à partir d'un liquide aqueux, caractérisé en ce qu'il est mis en oeuvre dans un évaporateur selon la revendication 12, utilisant des tubes de polyéthylène de haute densité à une température d'entrée de l'eau d'environ 60°C.